# EUROPEAN PATENT APPLICATION

(11) **EP 4 661 365 A1**
(43) Date of publication of application: **10.12.2025**
(21) Application number: 23923752.2
(22) Date of filing: 08.11.2023
(51) Int. Cl.: H04L 45/12

(54) **FORWARD PATH DETERMINATION METHOD AND APPARATUS, ELECTRONIC DEVICE AND STORAGE MEDIUM**

(30) Priority: 20.02.2023 CN 202310171944
(71) Applicant: Huawei Technologies Co., Ltd., Shenzhen, Guangdong 518129 (CN)
(72) Inventor: ZHU, Yong, Shenzhen, Guangdong 518129 (CN)
(74) Representative: Pfenning, Meinig & Partner mbB
(86) International application number: PCT/CN2023/130537
(87) International publication number: WO 2024/174588

(57) **Abstract**

This application discloses a forwarding path determining method and apparatus, an electronic device, and a storage medium, and pertains to the field of communication technologies. In this method, a forwarding path that satisfies an essential constraint and a non-essential constraint of a service in a communication network is first calculated, and when path calculation fails, a forwarding path that satisfies the essential constraint in the communication network is then determined, so that the determined forwarding path can satisfy as many service requirements as possible.

## Description

This application claims priority to Chinese Patent Application No. 202310171944.4, filed on February 20, 2023 and entitled "FORWARDING PATH DETERMINING METHOD AND APPARATUS, ELECTRONIC DEVICE, AND STORAGE MEDIUM", which is incorporated herein by reference in its entirety.

### TECHNICAL FIELD

This application relates to the field of communication technologies, and in particular, to a forwarding path determining method and apparatus, an electronic device, and a storage medium.

### BACKGROUND

With the advent of the 5G era, a service poses more requirements on a forwarding service in a communication network. A control device establishes, for the service in the communication network based on a service requirement, a target forwarding path that satisfies the service requirement, for traffic of the service to be forwarded along the target forwarding path.

Once network quality of the communication network deteriorates or a fault occurs on the target forwarding path, the target forwarding path cannot satisfy the service requirement. If there is no other forwarding path that satisfies the service requirement in the communication network, the traffic of the service is forwarded based on a shortest path in the communication network in a "best effort (best effort, BE)" manner, but the shortest path cannot satisfy the service requirement, either. Therefore, when the network quality deteriorates or the fault occurs on the target forwarding path, there is an urgent need for a forwarding path determining method, to determine, for the service, a forwarding path that satisfies as many service requirements as possible.

### SUMMARY

Embodiments of this application provide a forwarding path determining method and apparatus, an electronic device, and a storage medium, to determine, for a service, a forwarding path that satisfies as many service requirements as possible. The technical solutions are as follows.

According to a first aspect, a forwarding path determining method is provided. In this method, based on an essential constraint and a non-essential constraint of a service, a forwarding path (namely, a first forwarding path) that satisfies the essential constraint and the non-essential constraint in a communication network is first calculated; and when calculation of the first forwarding path fails, a forwarding path (namely, a second forwarding path) that satisfies at least the essential constraint in the communication network is then determined.

In this method, the forwarding path that satisfies the essential constraint and the non-essential constraint of the service in the communication network is first calculated, and when path calculation fails, a forwarding path that satisfies the essential constraint in the communication network is then determined, so that the determined forwarding path can satisfy as many service requirements as possible.

In a possible implementation, there are a plurality of non-essential constraints of the service, the plurality of non-essential constraints correspond to different non-essential levels, and the non-essential level indicates a non-essential degree of a corresponding non-essential constraint in a process of determining the second forwarding path. Based on this, the process of determining the second forwarding path in the communication network if calculation of the first forwarding path fails may be: first calculating, based on the essential constraint if calculation of the first forwarding path fails, an optimal path (namely, a third forwarding path) that satisfies the essential constraint in the communication network; and then calculating the second forwarding path based on the essential constraint, the plurality of non-essential constraints, and a plurality of non-essential levels corresponding to the plurality of non-essential constraints if calculation of the third forwarding path succeeds. In this case, the calculated second forwarding path satisfies the essential constraint and at least one non-essential constraint.

Based on the foregoing possible implementation, in addition to satisfying the essential constraint of the service, the determined second forwarding path can further satisfy a requirement of the at least one non-essential constraint of the service, so that the second forwarding path can satisfy as many constraints in a global constraint as possible, to satisfy as many service requirements as possible.

In a possible implementation, the process of calculating the second forwarding path based on the plurality of non-essential constraints, the plurality of non-essential levels corresponding to the plurality of non-essential constraints, and the essential constraint may be: for a first non-essential level in the plurality of non-essential levels, first calculating the second forwarding path based on the essential constraint and each non-essential constraint whose non-essential level is higher than the first non-essential level; and if calculation of the second forwarding path fails, performing, by using a previous non-essential level of the first non-essential level as a new first non-essential level, the step of calculating the second forwarding path based on the essential constraint and each non-essential constraint whose non-essential level is higher than the first non-essential level, until calculation of the second forwarding path succeeds.

Based on the foregoing possible implementation, on the basis of a global constraint including the essential constraint and the non-essential constraint, non-essential constraints are sequentially ignored in ascending order of non-essential levels, to attempt to calculate the second forwarding path. If the communication network supports establishment of a forwarding path that satisfies most consecutive non-essential constraints at high non-essential levels, in this manner, a quantity of times of calculating the second forwarding path can be reduced, the second forwarding path can be quickly determined, and efficiency of determining the second forwarding path can be improved.

In another possible implementation, the process of calculating the second forwarding path based on the plurality of non-essential constraints, the plurality of non-essential levels corresponding to the plurality of non-essential constraints, and the essential constraint may be: for a second non-essential level in the plurality of non-essential levels, first calculating a fourth forwarding path in the communication network based on the essential constraint and each non-essential constraint whose non-essential level is higher than or equal to the second non-essential level; if calculation of the fourth forwarding path succeeds, then performing, by using a next non-essential level of the second non-essential level as a new second non-essential level, the step of calculating a fourth forwarding path in the communication network based on the essential constraint and each non-essential constraint whose non-essential level is higher than or equal to the second non-essential level, until calculation of a fourth forwarding path fails; and determining a last successfully calculated fourth forwarding path as the second forwarding path.

Based on the foregoing possible implementation, non-essential constraints are sequentially combined with the essential constraint in descending order of non-essential levels, to attempt to calculate the fourth forwarding path. If the communication network supports establishment of a forwarding path that satisfies a few consecutive non-essential constraints at high non-essential levels, in this manner, a quantity of times of calculating the fourth forwarding path can be reduced, the second forwarding path can be quickly determined, and efficiency of determining the second forwarding path can be improved.

In another possible implementation, the process of calculating the second forwarding path based on the essential constraint, the plurality of non-essential constraints, and the plurality of non-essential levels corresponding to the plurality of non-essential constraints may be: for a third non-essential level in the plurality of non-essential levels, first calculating a fifth forwarding path in the communication network based on the essential constraint, a non-essential constraint at the third non-essential level, and each target constraint; if calculation of the fifth forwarding path succeeds, then performing, by using the non-essential constraint at the third non-essential level as a new target constraint, and using a next non-essential level of the third non-essential level as a new third non-essential level, the step of calculating a fifth forwarding path in the communication network based on the essential constraint, a non-essential constraint at the third non-essential level, and each target constraint; or if calculation of the fifth forwarding path fails, then performing, by using a next non-essential level of the third non-essential level as a new third non-essential level, the step of calculating a fifth forwarding path in the communication network based on the essential constraint, a non-essential constraint at the third non-essential level, and each target constraint, until calculation based on each non-essential constraint is completed; and determining a last successfully calculated fifth forwarding path as the second forwarding path, where the target constraint is a non-essential constraint that can be used for calculating a forwarding path after being combined with the essential constraint.

Based on the foregoing possible implementation, non-essential constraints are sequentially combined with the essential constraint in descending order of non-essential levels, to attempt to calculate the fifth forwarding path. When path calculation fails, a currently combined non-essential constraint can be ignored, and a non-essential constraint at a lower non-essential level continues to be combined to attempt to calculate the fifth forwarding path, until all non-essential constraints are traversed, and the last successfully calculated fifth forwarding path is used as the second forwarding path. However, because the last successfully calculated fifth forwarding path satisfies a largest quantity of constraints, the finally determined second forwarding path can satisfy as many service requirements as possible.

In a possible implementation, the process of determining the second forwarding path in the communication network if calculation of the first forwarding path fails may be: calculating, based on the essential constraint if calculation of the first forwarding path fails, an optimal path (namely, a third forwarding path) that satisfies the essential constraint in the communication network.

Based on the foregoing possible implementation, the third forwarding path may be calculated based on the essential constraint, and there is no need to attempt to calculate the second forwarding path. This saves computing power resources.

In a possible implementation, there are a plurality of non-essential constraints of the service, and at least one non-essential constraint is related to a service level agreement SLA of the service. Based on this, the process of determining the second forwarding path in the communication network if calculation of the first forwarding path fails may be: first calculating, based on the essential constraint if calculation of the first forwarding path fails, an optimal path that satisfies the essential constraint in the communication network; and calculating the second forwarding path based on the essential constraint and the non-essential constraint related to the service level agreement SLA of the service if calculation of the optimal path succeeds.

Based on the foregoing possible implementation, a forwarding path that satisfies the essential constraint and the at least one SLA-related non-essential constraint is used as the second forwarding path, so that the second forwarding path can satisfy as many SLA requirements of the service as possible.

In a possible implementation, the non-essential constraint is related to the service level agreement SLA of the service.

Based on the foregoing possible implementation, the determined second forwarding path can satisfy an SLA requirement of the service.

According to a second aspect, a forwarding path determining apparatus is provided. The apparatus is configured to perform the foregoing forwarding path determining method. Specifically, the forwarding path determining apparatus includes a functional module configured to perform the forwarding path determining method according to the first aspect or any one of the optional manners of the first aspect.

According to a third aspect, an electronic device is provided. The electronic device includes a processor, and the processor is configured to execute program code, so that the electronic device performs operations performed for implementing the foregoing forwarding path determining method.

According to a fourth aspect, a computer-readable storage medium is provided. The storage medium stores at least one piece of program code, and the program code is read by a processor, so that an electronic device performs operations performed in the foregoing forwarding path determining method.

According to a fifth aspect, a computer program product or a computer program is provided. The computer program product or the computer program includes program code, and the program code is stored in a computer-readable storage medium. A processor of an electronic device reads the program code from the computer-readable storage medium, and the processor executes the program code, so that the electronic device performs the method according to the first aspect or the optional implementations of the first aspect.

Based on the implementations provided in the foregoing aspects, further combination may be performed in this application to provide more implementations.

### BRIEF DESCRIPTION OF DRAWINGS

FIG. 1 is a diagram of a communication network according to an embodiment of this application;
FIG. 2 is a flowchart of a forwarding path determining method according to an embodiment of this application;
FIG. 3 is a diagram of a structure of a control device according to an embodiment of this application;
FIG. 4 is a service flowchart of a control device according to an embodiment of this application;
FIG. 5 is a diagram of a structure of a forwarding path determining apparatus according to an embodiment of this application; and
FIG. 6 is a diagram of a structure of an electronic device according to an embodiment of this application.

### DESCRIPTION OF EMBODIMENTS

To make objectives, technical solutions, and advantages of this application clearer, the following further describes the implementations of this application in detail with reference to the accompanying drawings.

This application provides a forwarding path determining method. The following describes an implementation environment of the forwarding path determining method.

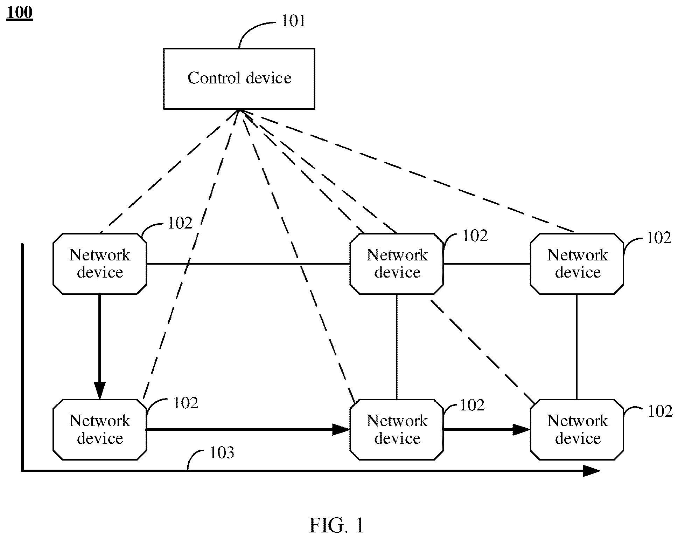

For example, FIG. 1 is a diagram of a communication network according to an embodiment of this application. As shown in FIG. 1, a communication network 100 is configured to provide a data forwarding service for a service, and the communication network 100 includes a control device 101 and a plurality of network devices 102. The control device 101 is connected to the plurality of network devices 102. The control device 101 is configured to control the plurality of network devices 102. The control device 101 is a software-defined networking (software-defined networking, SDN) controller in the data communication field, an SDN controller in the transmission field, or a controller of another type. A controller type of the control device 101 is not limited in embodiments of this application.

The network device 102 is a device having a data forwarding function, for example, a router, a switch, or the like. The network devices 102 in the communication network 100 are connected to each other. The plurality of network devices 102 form a forwarding path 103 of the service. Traffic of the service is transmitted across the communication network 100 through the forwarding path 103. In a transmission direction of the traffic on the forwarding path 103, a 1^{st} network device 102 that receives the traffic on the forwarding path 103 is referred to as a source node or an ingress node, a last network device 102 that outputs the traffic on the forwarding path 103 is referred to as a sink node or an egress node, and a network device 102 between the source node and the sink node on the forwarding path 103 is referred to as an intermediate node, where the intermediate node is an optional node on the forwarding path 103. In some other embodiments, the forwarding path 103 does not include an intermediate node. It should be understood that the network devices 102 in the communication network 100 may form a plurality of forwarding paths 103, one network device 102 may be located on at least one forwarding path 103, and the forwarding path 103 may also be referred to as a tunnel.

In a possible implementation, the control device 101 determines a forwarding path for the service by performing the forwarding path determining method provided in this application, and establishes the determined forwarding path in the communication network 100, for the traffic of the service to be transmitted on the established forwarding path.

In some other embodiments, the control device 101 does not belong to the communication network 100, and the control device 101 is located outside the communication network 100. In this case, the control device 101 and the communication network 100 form a forwarding path determining system or a forwarding path calculation system. A location relationship between the control device 101 and the communication network 100 is not limited in embodiments of this application.

With reference to the foregoing communication network, the following describes in detail the forwarding path determining method provided in this application.

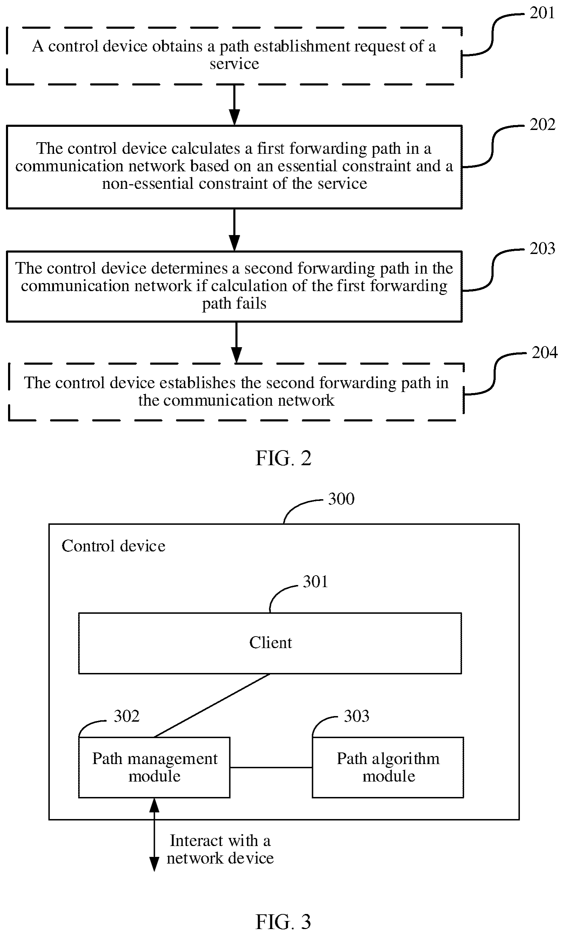

FIG. 2 is a flowchart of a forwarding path determining method according to an embodiment of this application. As shown in FIG. 2, the method is performed by a control device, and the method includes the following steps 201 to 204.

201: The control device obtains a path establishment request of a service, where the path establishment request indicates to establish a forwarding path for the service based on a global constraint of the service.

The service is any service served by a communication network. The global constraint includes an essential constraint and a non-essential constraint of the service. There is at least one essential constraint of the service, and the essential constraint is a condition that is mandatory for a to-be-established forwarding path to satisfy, and is also referred to as a strict constraint. There is at least one non-essential constraint of the service, and the non-essential constraint is a condition that is not mandatory for the to-be-established forwarding path to satisfy, and is also referred to as a non-strict constraint.

The path establishment request is triggered in any one of the following Manners 1 to 3.

Manner 1: The path establishment request is triggered by a path establishment operation of a user.

For example, it is assumed that a forwarding path has not been configured for a service in the communication network; or a forwarding path configured for the service already exists (that is, there is already a forwarding path) in the communication network, and a new forwarding path further needs to be established for the service based on a service requirement. In this case, the user requests, using a terminal, the control device to establish the forwarding path for the service.

For example, the terminal displays a forwarding path establishment interface of the service. The forwarding path establishment interface includes a global constraint configuration table, where the global constraint configuration table is used to configure an essential constraint and a non-essential constraint for the service from a plurality of constraints, and the plurality of constraints form a global constraint of the forwarding path of the service.

In a possible implementation, at least one constraint in the global constraint is related to a service level agreement (service level agreement, SLA) of the service, and remaining constraints are related to forwarding path attributes. In a global constraint configuration table shown in the following Table 1, SLA-related constraints include a bandwidth constraint, a latency constraint, a packet loss rate constraint, a bit error rate constraint, and the like of the forwarding path. In some other embodiments, the global constraint may alternatively include an SLA-related constraint in addition to the bandwidth, latency, and packet loss rate constraints. Types and a quantity of SLA-related constraints in the global constraint are not limited in embodiments of this application.

**Table 1**

| Constraint | Bandwidth | Latency | Packet loss rate | Bit error rate | Affinity attribute | Explicit path | Hop count |
|---|---|---|---|---|---|---|---|
| Essential or not | Y | Y | N | N | N | N | N |

In the global constraint configuration table shown in Table 1, the path attribute-related constraints include the affinity attribute constraint, the explicit path constraint, the hop count constraint, and the like of the forwarding path. In some other embodiments, the global constraint may alternatively include a forwarding path attribute-related constraint in addition to the affinity attribute, explicit path, and hop count constraints. Types and a quantity of path attribute-related constraints in the global constraint are not limited in embodiments of this application. It should be understood that the global constraint shown in Table 1 is an example. In another embodiment, the global constraint may not include the SLA-related constraint, or may include other types of constraints on a forwarding path required by the service, other than the SLA-related constraint and the forwarding path attribute. The plurality of constraints in the global constraint may be set based on an actual application scenario. Types and a quantity of constraints in the global constraint are not limited in embodiments of this application.

Based on the service requirement, the user selects at least one constraint from the global constraint, configures the constraint as an essential constraint, and configures a remaining constraint as a non-essential constraint. As shown in Table 1, each constraint in the global constraint corresponds to one essential constraint configuration box (to be specific, indicating whether the constraint is an essential constraint). For any constraint in the global constraint, if the service requires that it is mandatory for the forwarding path to satisfy the constraint, the user enters "Y" in an essential constraint configuration box corresponding to the constraint, to indicate that the essential constraint is configured as an essential constraint. If the service requires that it is not mandatory for the forwarding path to satisfy the constraint, the user enters "N" in an essential constraint configuration box corresponding to the constraint, to indicate that the essential constraint is configured as a non-essential constraint. As shown in Table 1, the bandwidth constraint and the latency constraint are configured as essential constraints, and the remaining constraints in Table 1 are configured as non-essential constraints.

It should be understood that, because the user configures the essential constraint based on the service requirement, a result of configuring the essential constraint is uncontrollable. When the global constraint includes a plurality of SLA-related constraints, the user may configure all of the SLA-related constraints as essential constraints; may configure some of the SLA-related constraints as essential constraints, and configure a remaining SLA-related constraint as a non-essential constraint; or may configure the SLA-related constraints as non-essential constraints, and configure forwarding path attribute-related constraints as essential constraints.

In another possible implementation, when there are a plurality of non-essential constraints, the global constraint configuration table is further used to configure non-essential levels for the plurality of non-essential constraints, where the non-essential level indicates a non-essential degree of a corresponding non-essential constraint in a process of determining the forwarding path of the service. In some embodiments, a higher non-essential level indicates a lower non-essential degree, in other words, a higher essential degree, of a corresponding non-essential constraint. In some other embodiments, a lower non-essential level indicates a higher non-essential degree, in other words, a lower essential degree, of a corresponding non-essential constraint. It should be understood that the essential constraint is a constraint with a highest essential degree by default in the global constraint. Therefore, there is no need to configure a non-essential level for the essential constraint.

A global constraint configuration table shown in the following Table 2 further includes a plurality of non-essential level configuration boxes, and each non-essential level configuration box corresponds to each constraint in the global constraint. When there are a plurality of non-essential constraints in the global constraint, the non-essential levels are respectively entered in non-essential level configuration boxes corresponding to the non-essential constraints based on the service requirement. As shown in Table 2, non-essential levels of the packet loss rate constraint, the bit error rate constraint, the affinity attribute constraint, and the hop count constraint are level 1, level 2, level 3, level 4, and level 5 respectively, where level 1 is higher than level 2, level 2 is higher than level 3, level 3 is higher than level 4, and level 4 is higher than level 5. A lower non-essential level indicates a higher non-essential degree of a corresponding non-essential constraint.

**Table 2**

| Constraint | Bandwidth | Latency | Packet loss rate | Bit error rate | Affinity attribute | Explicit path | Hop count |
|---|---|---|---|---|---|---|---|
| Essential or not | Y | Y | N | N | N | N | N |
| Non-essential level | None | None | 1 | 2 | 3 | 4 | 5 |

It should be understood that a quantity of non-essential levels depends on a quantity of non-essential constraints in the global constraint, and each non-essential constraint corresponds to one non-essential level. The five non-essential levels shown in Table 1 are an example. In some other embodiments, there may be less than five or more than five non-essential levels. The quantity of non-essential constraints in the global constraint and an order of the non-essential levels are not limited in embodiments of this application.

After configuring the essential constraint of the service, the non-essential constraint of the service, and the non-essential level corresponding to the non-essential constraint of the service, the user performs a selection operation on a confirmation option in the forwarding path establishment interface, to indicate to establish the forwarding path for the service based on a configuration of the global constraint in the global constraint configuration table, to complete the path establishment operation for the service. In response to the selection operation on the confirmation option, the terminal sends the path establishment request to the control device, and the control device receives the path establishment request. In this case, the path establishment request indicates to establish, for the service based on the essential constraint and the non-essential constraint in the global constraint, a forwarding path that satisfies the essential constraint. When the non-essential level is configured for the non-essential constraint, the path establishment request further indicates the non-essential levels corresponding to the plurality of non-essential constraints, where the plurality of non-essential constraints correspond to different non-essential levels.

The foregoing is described by using an example in which the user configures the essential constraint and the non-essential constraint for the service. In some other embodiments, the user may not configure the essential constraint or the non-essential constraint for the service. In this case, the control device determines the essential constraint and the non-essential constraint in the global constraint based on a default configuration of the global constraint, where the default configuration of the global constraint is used to record the essential constraint and the non-essential constraint in the global constraint. In some other embodiments, the default configuration of the global constraint is further used to record a non-essential level corresponding to each non-essential constraint.

Manner 2: The path establishment request is triggered by a change operation of a user on a global constraint of an existing forwarding path.

If the service requires to change the global constraint of the forwarding path, the user performs the change operation on the global constraint of the existing forwarding path of the service via a terminal, to trigger the path establishment request. Changing the global constraint of the forwarding path includes changing at least one essential constraint in the global constraint to a non-essential constraint, changing at least one non-essential constraint in the global constraint to an essential constraint, changing a non-essential level of the non-essential constraint, adding an essential constraint, reducing an essential constraint, adding a non-essential constraint, reducing a non-essential constraint, or the like.

For example, the terminal displays a constraint change interface of the service. The constraint change interface includes a global constraint configuration table of the existing forwarding path, and the user re-configures a global constraint for the service in the global constraint configuration table. For a configuration manner, refer to the foregoing Manner 1. After the configuration is completed, a selection operation is performed on a confirmation option in the constraint change interface, to indicate to establish a new forwarding path for the service based on the updated global constraint, to complete the change operation on the global constraint of the existing forwarding path. In response to the selection operation on the confirmation option in the constraint change interface, the terminal sends the path establishment request to the control device. Correspondingly, the control device receives the path forwarding request. In this case, the path establishment request indicates to replace the global constraint of the existing forwarding path with the updated global constraint, and establish the new forwarding path based on the updated global constraint, to replace the existing forwarding path.

Manner 3: The path establishment request is triggered when a fault occurs on an existing forwarding path of the service or the existing forwarding path does not satisfy the essential constraint of the service.

That the existing forwarding path does not satisfy the essential constraint of the service may be caused by deterioration of network quality of the communication network, or may be caused by another reason.

The control device performs security detection on a plurality of established forwarding paths in the communication network, and if it is detected that a fault occurs on a forwarding path, the path establishment request is generated, and the forwarding path on which the fault occurs is deleted. Alternatively, the control device performs essential constraint detection on a plurality of established forwarding paths in the communication network, and if it is detected that a forwarding path does not satisfy any essential constraint of a corresponding service, the path establishment request is generated, and the forwarding path that does not satisfy the essential constraint is deleted. In this case, the path establishment request indicates to re-establish, for the corresponding service based on a global constraint of the forwarding path on which the fault occurs (or the forwarding path that does not satisfy the essential constraint), a forwarding path that satisfies the essential constraint.

After receiving the path establishment request, the control device performs the following step 202 based on the global constraint indicated by the path request.

202: The control device calculates a first forwarding path in the communication network based on the essential constraint and the non-essential constraint of the service.

The first forwarding path is a reachable forwarding path that can satisfy the global constraint of the service, and the reachable forwarding path is a forwarding path that a message can reach between a source node and a sink node. In a possible implementation, there may be at least one reachable forwarding path that satisfies the global constraint of the service in the communication network, and in this case, the control device uses an optimal forwarding path in a plurality of reachable forwarding paths as the first forwarding path, where the optimal forwarding path may be a forwarding path with a smallest path cost (cost) in the plurality of reachable forwarding paths.

In a possible implementation, the control device obtains current topology information of the communication network, where the topology information indicates a connection relationship between network devices in the communication network, an attribute (such as a bandwidth, a latency, or a packet loss rate) of each network device in the communication network, an attribute (such as an affinity attribute, an explicit path, or a hop count) of an established forwarding path in the communication network, and the like.

The control device calculates, based on the topology information and the global constraint of the service, an optimal path that satisfies the global constraint. If the optimal path that satisfies the global constraint can be calculated, the calculated optimal path is the first forwarding path, in other words, calculation of the first forwarding path succeeds. If no optimal path that satisfies the global constraint is calculated, calculation of the first forwarding path fails.

If calculation of the first forwarding path succeeds, and the first forwarding path is not established in the communication network, the control device establishes the first forwarding path in the communication network, and configures the first forwarding path as the forwarding path of the service. For example, the control device sends service-related information (for example, an identifier of the service) to each network device on the first forwarding path, so that each network device on the first forwarding path transmits traffic of the service on the first forwarding path based on the service-related information.

If calculation of the first forwarding path succeeds, and the first forwarding path is already established in the communication network, the control device does not need to establish the first forwarding path again in the communication network. If the established first forwarding path is originally the forwarding path of the service, the control device does not need to configure the first forwarding path as the forwarding path of the service again. If the established first forwarding path is not originally the forwarding path of the service, the control device configures the first forwarding path as the forwarding path of the service.

If calculation of the first forwarding path fails, the following step 203 is performed, to determine, for the service, a forwarding path that satisfies as many service requirements as possible.

203: The control device determines a second forwarding path in the communication network if calculation of the first forwarding path fails, where the second forwarding path satisfies the essential constraint.

The second forwarding path is a reachable forwarding path that can satisfy all essential constraints of the service. There are two possible cases in which the second forwarding path satisfies all the essential constraints of the service. In a first case, the second forwarding path satisfies all the essential constraints of the service and at least one non-essential constraint of the service. In a second case, the second forwarding path satisfies all the essential constraints of the service and does not satisfy any non-essential constraints of the service.

When there are a plurality of non-essential constraints of the service, and the plurality of non-essential constraints correspond to different non-essential levels, the control device determines the second forwarding path based on the essential constraint of the service, the plurality of non-essential constraints of the service, and the non-essential levels of the plurality of non-essential constraints. The following describes this implementation in detail with reference to the following steps 2031 and 2032.

Step 2031: The control device calculates a third forwarding path in the communication network based on the essential constraint if calculation of the first forwarding path fails, where the third forwarding path is an optimal path that satisfies the essential constraint of the service in the communication network.

There may be at least one reachable forwarding path that satisfies the essential constraint in the communication network, and in this case, the control device uses an optimal forwarding path in a plurality of reachable forwarding paths as the third forwarding path.

In a possible implementation, the control device calculates, based on current topology information of the communication network and all the essential constraints of the service, an optimal path that satisfies all the essential constraints. If the optimal path that satisfies all the essential constraints can be calculated, the calculated optimal path is the third forwarding path, in other words, calculation of the third forwarding path succeeds. If no optimal path that satisfies all the essential constraints is calculated, calculation of the third forwarding path fails.

When calculating the third forwarding path, if a plurality of forwarding paths that satisfy all the essential constraints are calculated, the control device determines a forwarding path with a smallest path cost in the forwarding paths as the third forwarding path.

The following Table 3 is used as an example. Table 3 shows path costs of seven reachable forwarding paths (PATH 1 to PATH 7) in the communication network and satisfaction statuses of constraints of the reachable forwarding paths. PATH 2 to PATH 7 each satisfy all the essential constraints, and a path cost of PATH 2 in PATH 2 to PATH 7 is the smallest. In this case, PATH 2 is the third forwarding path.

**Table 3**

| Forwarding path | Path cost | Whether the constraint is satisfied | | | | | | |
|---|---|---|---|---|---|---|---|---|
| | | Essential constraint | | Non-essential constraint | | | | |
| | | Bandwidth | Latency | Packet loss rate | Bit error rate | Affinity attribute | Explicit path | Hop count |
| PATH 1 | 10 | N | Y | Y | Y | Y | Y | Y |
| PATH 2 | 20 | Y | Y | N | N | N | N | N |
| PATH 3 | 30 | Y | Y | N | Y | Y | Y | Y |
| PATH 4 | 40 | Y | Y | Y | Y | N | Y | N |
| PATH 5 | *50* | Y | Y | Y | N | Y | Y | N |
| PATH 6 | 60 | Y | Y | Y | Y | Y | N | N |
| PATH 7 | 70 | Y | Y | Y | Y | Y | N | Y |
| Non-essential level | None | None | None | 1 | 2 | 3 | 4 | 5 |

"Y" indicates that a forwarding path satisfies a corresponding constraint, and "N" indicates that a forwarding path does not satisfy a corresponding constraint.

It should be understood that, in a process in which the control device calculates the forwarding path, not all reachable forwarding paths are exhaustively listed, and optimal path calculation is performed in consideration of a combination of different constraints. For example, in step 2031, optimal path calculation is performed based on the global constraint of the service. In other words, a table similar to Table 3 is not generated in the process in which the control device calculates the forwarding path. Table 3 is an example used to describe a case in which it is assumed that there are seven reachable forwarding paths, and a smallest path cost is used as a path calculation target in embodiments of this application.

Step 2032: The control device calculates the second forwarding path based on the essential constraint of the service, the plurality of non-essential constraints of the service, and a plurality of non-essential levels corresponding to the plurality of non-essential constraints of the service if calculation of the third forwarding path succeeds.

In this case, the calculated second forwarding path is a reachable forwarding path that satisfies the essential constraint and at least one non-essential constraint.

In a possible implementation, the control device adds or reduces, in an order of the plurality of non-essential levels, a non-essential constraint on the basis of the essential constraint, to attempt to calculate a second forwarding path that satisfies more non-essential constraints. The following describes, with reference to any one of Manners A to C, a process of attempting to calculate the second forwarding path.

Manner A: On the basis of the essential constraint, corresponding non-essential constraints are sequentially ignored in ascending order of non-essential levels, to attempt to calculate the second forwarding path until calculation of the second forwarding path succeeds.

A1: For a first non-essential level in the plurality of non-essential levels, the control device calculates the second forwarding path based on the essential constraint and each non-essential constraint whose non-essential level is higher than the first non-essential level.

The first non-essential level is a non-essential level other than a highest non-essential level in the plurality of non-essential levels.

The control device calculates an optimal path in the communication network based on the current topology information of the communication network, all the essential constraints of the service, and all non-essential constraints corresponding to a second non-essential level. If the optimal path is calculated, the calculated optimal path is the second forwarding path, in other words, calculation of the second forwarding path succeeds. In this case, there is no need to perform the following step A2. If no optimal path is calculated, the current attempt to calculate the second forwarding path that satisfies the non-essential constraint fails, and the following step A2 continues to be performed.

A2: If calculation of the second forwarding path fails, the control device performs the foregoing step A1 by using a previous non-essential level of the first non-essential level as a new first non-essential level, until calculation of the second forwarding path succeeds.

Table 3 is used as an example. Starting from a lowest non-essential level (namely, level 5) in the plurality of non-essential levels, the control device uses level 5 as a first non-essential level, and levels 1 to 4 each are a second non-essential level. A non-essential constraint, namely, the hop count constraint, corresponding to level 5 is ignored, and optimal path calculation is performed based on six constraints such as the bandwidth constraint, the latency constraint, the packet loss rate constraint, the bit error rate constraint, the affinity attribute constraint, and the explicit path constraint. Because there is no forwarding path that satisfies the six constraints in PATH 1 to PATH 7, path calculation fails.

In ascending order of the non-essential levels, the control device then uses level 4 as a new first non-essential level, and levels 1 to 3 each are a new second non-essential level. Non-essential constraints corresponding to level 4 and level 5 are ignored, and optimal path calculation is performed based on five constraints such as the bandwidth constraint, the latency constraint, the packet loss rate constraint, the bit error rate constraint, and the affinity attribute constraint. It is assumed that a smallest path cost is used as the path calculation target. In this case, because PATH 6 and PATH 7 each satisfy the five constraints, and a path cost of PATH 6 is less than a path cost of PATH 7, PATH 6 is calculated as the optimal path, in other words, PATH 6 is the second forwarding path. The attempt to calculate the second forwarding path ends.

In Manner A, on the basis of the global constraint, non-essential constraints are sequentially ignored in ascending order of non-essential levels, to attempt to calculate the second forwarding path. If the communication network supports establishment of a forwarding path that satisfies most consecutive non-essential constraints at high non-essential levels, in this manner, a quantity of times of calculating the second forwarding path can be reduced, the second forwarding path can be quickly determined, and efficiency of determining the second forwarding path can be improved.

When traversal is performed until a second highest non-essential level in the plurality of non-essential levels is used as the first non-essential level to attempt to calculate the second forwarding path, the second non-essential level is a highest non-essential level in the plurality of non-essential levels. If calculation of the second forwarding path based on all the essential constraints and a non-essential constraint of the highest non-essential level fails, the control device uses the third forwarding path calculated in step 2031 as the second forwarding path.

Manner B: Non-essential constraints are sequentially combined with the essential constraint in descending order of non-essential levels, to attempt to calculate an optimal path until path calculation fails, and a last successfully calculated forwarding path is used as the second forwarding path.

B1: For a second non-essential level in the plurality of non-essential levels, the control device calculates a fourth forwarding path in the communication network based on the essential constraint and each non-essential constraint whose non-essential level is higher than or equal to the second non-essential level.

The second non-essential level is a non-essential level other than a lowest non-essential level in the plurality of non-essential levels. The fourth forwarding path is a reachable forwarding path that satisfies the essential constraint and each non-essential constraint whose non-essential level is higher than or equal to the second non-essential level.

The control device calculates an optimal path in the communication network based on the current topology information of the communication network, all the essential constraints of the service, and each non-essential constraint whose non-essential level is higher than or equal to the second non-essential level. If the optimal path is calculated, the calculated optimal path is a fourth forwarding path, in other words, calculation of the fourth forwarding path succeeds. The following step B2 continues to be performed.

B2: If calculation of the fourth forwarding path succeeds, the control device performs the foregoing step B1 by using a next non-essential level of the second non-essential level as a new second non-essential level, until calculation of the fourth forwarding path fails, and determines a last successfully calculated fourth forwarding path as the second forwarding path.

Each time the control device calculates a fourth forwarding path, the fourth forwarding path is added to a path sequence, and fourth forwarding paths in the path sequence are sorted in a front-to-back calculation order, until calculation of a fourth forwarding path fails. A last fourth forwarding path in the path sequence is determined as the second forwarding path.

Alternatively, after a 1^{st} fourth forwarding path is calculated, each time a new fourth forwarding path is calculated subsequently, the control device replaces a fourth forwarding path calculated at a previous time with the new fourth forwarding path, until calculation of a fourth forwarding path fails, and uses a currently reserved fourth forwarding path as the second forwarding path.

Table 3 is used as an example. Starting from a highest non-essential level (namely, level 1) in the plurality of non-essential levels, the control device calculates a fourth forwarding path by using level 1 as a second non-essential level, and combining a non-essential constraint at level 1 with the essential constraints, in other words, performs optimal path calculation based on three constraints such as the bandwidth constraint, the latency constraint, and the packet loss rate constraint. It is assumed that a smallest path cost is used as the path calculation target. In this case, because PATH 4 to PATH 7 are forwarding paths that each satisfy the three constraints, and a path cost of PATH 4 in PATH 4 to PATH 7 is the smallest, PATH 4 is calculated as the optimal path, in other words, PATH 4 is a fourth forwarding path.

In descending order of the non-essential levels, the control device then calculates a fourth forwarding path again by using level 2 as a new second non-essential level, and combining a non-essential constraint at level 2 with the constraints used for calculating the fourth forwarding path at a previous time, in other words, performs optimal path calculation based on four constraints such as the bandwidth constraint, the latency constraint, the packet loss rate constraint, and the bit error rate constraint. It is assumed that a smallest path cost is used as the path calculation target. In this case, because PATH 4, PATH 6, and PATH 7 each satisfy the four constraints, and a path cost of PATH 4 in PATH 4, PATH 6, and PATH 7 is the smallest, PATH 4 is still calculated as the optimal path, in other words, PATH 4 is a new fourth forwarding path.

In descending order of the non-essential levels, the control device then calculates a fourth forwarding path again by using level 3 as a new second non-essential level, and combining a non-essential constraint at level 3 with the constraints used for calculating the fourth forwarding path at a previous time, in other words, performs optimal path calculation based on five constraints such as the bandwidth constraint, the latency constraint, the packet loss rate constraint, the bit error rate constraint, and the affinity attribute constraint. It is assumed that a smallest path cost is used as the path calculation target. In this case, because PATH 6 and PATH 7 each satisfy the five constraints, and a path cost of PATH 6 in PATH 6 and PATH 7 is smaller, PATH 6 is calculated as the optimal path. The fourth forwarding path is updated from PATH 4 to PATH 6.

In descending order of the non-essential levels, the control device then calculates a fourth forwarding path again by using level 4 as a new second non-essential level, and combining a non-essential constraint at level 4 with the constraints used for calculating the fourth forwarding path at a previous time, in other words, performs optimal path calculation based on six constraints such as the bandwidth constraint, the latency constraint, the packet loss rate constraint, the bit error rate constraint, the affinity attribute constraint, and the explicit path constraint. Because none of PATH 1 to PATH 7 satisfies the six constraints, calculation of the fourth forwarding path fails at this time. The attempt to calculate the fourth forwarding path ends, and PATH 6 is used as the second forwarding path.

In descending order of the non-essential levels, if the communication network supports establishment of a fourth forwarding path that satisfies a few consecutive non-essential constraints at non-essential levels, in Manner B, the non-essential constraints at high non-essential levels are sequentially combined, to attempt to calculate the fourth forwarding path, so that a quantity of times of calculating the fourth forwarding path can be reduced, the second forwarding path can be quickly determined, and efficiency of determining the second forwarding path can be improved.

In Manner B, the non-essential constraints are sequentially combined with the essential constraint in descending order of the non-essential levels, to attempt to calculate the fourth forwarding path, so that the quantity of times of calculating the fourth forwarding path can be reduced, the second forwarding path can be quickly determined, and the efficiency of determining the second forwarding path can be improved.

When attempting to calculate the fourth forwarding path by using a highest non-essential level in the plurality of non-essential levels as the second non-essential level, if calculation of the fourth forwarding path based on all the essential constraints and a non-essential constraint at the highest non-essential level fails, the control device uses the third forwarding path calculated in step 2031 as the second forwarding path.

Manner C: Non-essential constraints are sequentially combined with the essential constraint in descending order of non-essential levels, to attempt to calculate an optimal path. If path calculation fails due to combining of a non-essential constraint, the non-essential constraint is ignored, a non-essential constraint at a lower non-essential level continues to be combined until all the non-essential constraints are traversed, and a last successfully calculated forwarding path is used as the second forwarding path.

C1: For a third non-essential level in the plurality of non-essential levels, the control device calculates a fifth forwarding path in the communication network based on the essential constraint, a non-essential constraint at the third non-essential level, and each target constraint, where the target constraint is a non-essential constraint that can be used for calculating a forwarding path after being combined with the essential constraint.

The fifth forwarding path is a reachable forwarding path that satisfies the essential constraint, the non-essential constraint at the third non-essential level, and each target constraint.

The third non-essential level is any one of the plurality of non-essential levels. The control device first uses a highest non-essential level in the plurality of non-essential levels as the third non-essential level in descending order of the non-essential levels. Because a non-essential constraint at the highest non-essential level is not combined with the essential constraint to perform optimal path calculation, whether there is a target constraint in the plurality of non-essential constraints cannot be determined. In this case, the control device calculates the fifth forwarding path in the communication network based on the essential constraint and the non-essential constraint at the highest non-essential level, and determines whether there is a target constraint based on a calculation result of the third forwarding path.

For example, the control device calculates an optimal path in the communication network based on the current topology information of the communication network, all the essential constraints of the service, and the non-essential constraint at the highest non-essential level. If the optimal path is calculated, the calculated optimal path is a fifth forwarding path, in other words, calculation of the fifth forwarding path succeeds. If calculation of the fifth forwarding path succeeds at this time, the control device performs step C1 for a new third non-essential level by using the non-essential constraint at the highest non-essential level as a target constraint, and using a next non-essential level of the highest non-essential level as the new third non-essential level. If calculation of the fifth forwarding path fails at this time, and there is still no target constraint, a next non-essential level (that is, a second highest non-essential level) of the highest non-essential level is used as a new third non-essential level, and a fifth forwarding path is calculated again based on the essential constraint and a non-essential constraint at the second highest non-essential level. The rest may be deduced by analogy until a target constraint is determined. Step C1 is performed for a latest third non-essential level. If calculation of a fifth forwarding path based on all the essential constraints and a non-essential constraint at a lowest non-essential level in the plurality of non-essential levels still fails, there is no target constraint in the plurality of non-essential constraints. In this case, the control device determines the third forwarding path calculated in step 2031 as the second forwarding path.

It should be understood that, when no target constraint is determined, the fifth forwarding path may satisfy the essential constraint and a current third non-essential level. When a target constraint is determined, step C1 is performed for the latest third non-essential level.

When performing step C1, the control device calculates an optimal path in the communication network based on the current topology information of the communication network, the non-essential constraint at the third non-essential level, and each target constraint. If the optimal path is calculated, the calculated optimal path is a fifth forwarding path, in other words, calculation of the fifth forwarding path succeeds, and the following step C2 continues to be performed. If no optimal path is calculated, calculation of the fifth forwarding path fails at this time, and the following step C3 is performed.

C2: If calculation of the fifth forwarding path succeeds, the control device performs the foregoing step C1 for a new third non-essential level by using the non-essential constraint at the third non-essential level as a new target constraint, and using a next non-essential level of the third non-essential level as the new third non-essential level.

C3: If calculation of the fifth forwarding path fails, a next non-essential level of the third non-essential level is used as a new third non-essential level, and the foregoing step C1 is performed for the new third non-essential level until calculation based on each non-essential constraint is completed, and a last successfully calculated fifth forwarding path is determined as the second forwarding path.

Table 3 is used as an example. Starting from a highest non-essential level (namely, level 1) in the plurality of non-essential levels, the control device calculates a fifth forwarding path by using level 1 as a third non-essential level, and combining a non-essential constraint at level 1 with the essential constraints, in other words, performs optimal path calculation based on three constraints such as the bandwidth constraint, the latency constraint, and the packet loss rate constraint. It is assumed that a smallest path cost is used as the path calculation target. In this case, because PATH 4 to PATH 7 are forwarding paths that each satisfy the three constraints, and a path cost of PATH 4 in PATH 4 to PATH 7 is the smallest, PATH 4 is calculated as the optimal path, in other words, PATH 4 is a fifth forwarding path.

In descending order of the non-essential levels, the control device calculates a fifth forwarding path again by using the non-essential constraint at level 1 as a target constraint, then using level 2 as a new third non-essential level, and combining a non-essential constraint at level 2 with the constraints used for calculating the fifth forwarding path at a previous time, in other words, performs optimal path calculation based on four constraints such as the bandwidth constraint, the latency constraint, the packet loss rate constraint, and the bit error rate constraint. It is assumed that a smallest path cost is used as the path calculation target. In this case, because PATH 4, PATH 6, and PATH 7 each satisfy the four constraints, and a path cost of PATH 4 in PATH 4, PATH 6, and PATH 7 is the smallest, PATH 4 is still calculated as the optimal path, in other words, PATH 4 is a new fifth forwarding path.

In descending order of the non-essential levels, the control device calculates a fifth forwarding path again by using the non-essential constraint at level 2 as a newly added target constraint, then using 3 as a new third non-essential level, and combining a non-essential constraint at level 3 with the constraints used for calculating the fifth forwarding path at a previous time, in other words, performs optimal path calculation based on five constraints such as the bandwidth constraint, the latency constraint, the packet loss rate constraint, the bit error rate constraint, and the affinity attribute constraint. It is assumed that a smallest path cost is used as the path calculation target. In this case, because PATH 6 and PATH 7 each satisfy the five constraints, and a path cost of PATH 6 in PATH 6 and PATH 7 is smaller, PATH 6 is calculated as the optimal path. The fifth forwarding path is updated from PATH 4 to PATH 6.

In descending order of the non-essential levels, the control device calculates a fifth forwarding path again by using the non-essential constraint at level 3 as a newly added target constraint, then using level 4 as a new third non-essential level, and combining a non-essential constraint at level 4 with the constraints used for calculating the fifth forwarding path at a previous time, in other words, performs optimal path calculation based on six constraints such as the bandwidth constraint, the latency constraint, the packet loss rate constraint, the bit error rate constraint, the affinity attribute constraint, and the explicit path constraint. Because none of PATH 1 to PATH 7 satisfies the six constraints, calculation of the fifth forwarding path fails at this time.

In descending order of the non-essential levels, a fifth forwarding path is calculated again without using the non-essential constraint at level 4 as a target constraint (that is, the non-essential constraint at level 4 is ignored), and by using level 5 as a new third non-essential level, and combining a non-essential constraint at level 5 with the constraints used for successfully calculating the fifth forwarding path at a latest time, in other words, optimal path calculation is performed based on six constraints such as the bandwidth constraint, the latency constraint, the packet loss rate constraint, the bit error rate constraint, the affinity attribute constraint, and the hop count constraint. Because only PATH 7 in PATH 1 to PATH 7 satisfies the six constraints, the fifth forwarding path is updated from PATH 6 to PATH 7. In this case, because all the non-essential constraints are traversed, and PATH 7 is a last successfully calculated fifth forwarding path, PATH 7 is determined as the second forwarding path.

Alternatively, each time the control device determines a target constraint, the target constraint is added to a first condition sequence. A fifth forwarding path is calculated for the latest third non-essential level based on the essential constraint and each target constraint in the first condition sequence, until all the non-essential constraints are traversed, and the last successfully calculated fifth forwarding path is determined as the second forwarding path.

In Manner C, the non-essential constraints are sequentially combined with the essential constraint in descending order of the non-essential levels, to attempt to calculate the fifth forwarding path. When path calculation fails, a currently combined non-essential constraint can be ignored, a non-essential constraint at a lower non-essential level continues to be combined to attempt to calculate the fifth forwarding path, until all the non-essential constraints are traversed, and the last successfully calculated fifth forwarding path is used as the second forwarding path. However, because the last successfully calculated fifth forwarding path satisfies a largest quantity of constraints, the finally determined second forwarding path can satisfy as many service requirements as possible, in other words, the determined second forwarding path is a forwarding path with a highest service requirement satisfaction degree in the communication network.

In another possible implementation, the control device sequentially combines the non-essential constraints with the essential constraint in ascending order of the non-essential levels, to attempt to calculate an optimal path. If path calculation fails due to combining of a non-essential constraint, the non-essential constraint is ignored, a non-essential constraint at a higher non-essential level continues to be combined until all the non-essential constraints are traversed, and a last successfully calculated forwarding path is used as the second forwarding path. This possible implementation is similar to Manner C, but a direction of traversing the non-essential constraints in this implementation is opposite to that in Manner C. For a specific implementation process of this possible implementation, refer to Manner C. In this possible implementation, a beneficial effect of Manner C can also be achieved. Details of this possible implementation are not described in this embodiment of this application.

The second forwarding path determined in the foregoing steps 2031 and 2032 can further satisfy a requirement of at least one non-essential constraint of the service in addition to satisfying the essential constraint of the service, so that the second forwarding path can satisfy as many constraints in the global constraint as possible, to satisfy as many service requirements as possible.

In some other embodiments, the user does not set a non-essential level for each non-essential constraint. As a result, the received path establishment request does not indicate the non-essential level of each non-essential constraint, and the default configuration of the global constraint does not record the non-essential level of each non-essential constraint. In this case, the non-essential constraint in the global constraint does not have the non-essential level. When the non-essential constraint in the global constraint does not have the non-essential level, the control device implements step 203 in Manner D or Manner E.

Manner D: The control device calculates a third forwarding path in the communication network based on the essential constraint if calculation of the first forwarding path fails. If calculation of the third forwarding path succeeds, the calculated third forwarding path is determined as the second forwarding path; or if calculation of the third forwarding path fails, path calculation ends, and subsequent steps are not performed.

For a process of calculating the third forwarding path, refer to step 2031. Details are not described herein again.

In Manner D, the control device may calculate the third forwarding path based on the essential constraint, and does not need to attempt to calculate the second forwarding path. This saves computing power resources of the control device.

Manner E: An optimal path is attempted to be calculated based on the essential constraint. If calculation succeeds, an SLA-related non-essential constraint is combined until a forwarding path that satisfies the essential constraint and at least one SLA-related non-essential constraint is calculated.

E1: The control device calculates a third forwarding path in the communication network based on the essential constraint if calculation of the first forwarding path fails.

For a process of calculating the third forwarding path, refer to step 2031. Details are not described herein again.

E2: The control device calculates the second forwarding path based on the essential constraint and the SLA-related non-essential constraint of the service if calculation of the third forwarding path succeeds.

If there is only one SLA-related non-essential constraint in the global constraint, the control device performs optimal path calculation based on the essential constraint and the SLA-related non-essential constraint of the service. If the optimal path is calculated, the calculated optimal path is the second forwarding path. If calculation of the optimal path fails, the third forwarding path is determined as the second forwarding path.

If there are a plurality of SLA-related non-essential constraints in the global constraint, the control device sorts the plurality of non-essential constraints to obtain a second condition sequence, and determines the second forwarding path based on the essential constraint of the service, the plurality of non-essential constraints of the service, and an order of the plurality of non-essential constraints in the second condition sequence. The order of the plurality of non-essential constraints in the second condition sequence is similar to that of the non-essential levels of the non-essential constraints. For a process of determining the second forwarding path based on the essential constraint of the service, the plurality of non-essential constraints of the service, and the order of the plurality of non-essential constraints in the second condition sequence, refer to the foregoing process of determining the second forwarding path based on the essential constraint of the service, the plurality of non-essential constraints of the service, and the non-essential levels of the plurality of non-essential constraints. In this embodiment of this application, the process of determining the second forwarding path based on the essential constraint of the service, the plurality of non-essential constraints of the service, and the order of the plurality of non-essential constraints in the second condition sequence is not described.

Table 3 is used as an example. It is assumed that none of the five non-essential constraints in Table 3 has a non-essential level, and the third forwarding path that is first calculated by the control device based on the non-essential constraints (to be specific, the bandwidth constraint and the latency constraint) is PATH 2. Then, optimal path calculation is performed by combining all SLA-related non-essential constraints (the packet loss rate constraint and the bit error rate constraint) with the essential constraint, where PATH 4, PATH 6, and PATH 7 each satisfy the bandwidth constraint, the latency constraint, the packet loss rate constraint, and the bit error rate constraint, and a path cost of PATH 4 in PATH 4, PATH 6, and PATH 7 is the smallest. In this case, PATH 4 is determined as the second forwarding path.

In Manner E, the control device uses the forwarding path that satisfies the essential constraint and the at least one SLA-related non-essential constraint as the second forwarding path, so that the second forwarding path can satisfy as many SLA requirements of the service as possible.

204: The control device establishes the second forwarding path in the communication network.

If the second forwarding path is not established in the communication network, the control device establishes the second forwarding path in the communication network, and configures the second forwarding path as the forwarding path of the service. For example, the control device sends service-related information to each network device on the second forwarding path, so that each network device on the second forwarding path transmits traffic of the service on the second forwarding path based on the service-related information.

If the second forwarding path is already established in the communication network, the control device does not need to perform step 204. If the established second forwarding path is originally the forwarding path of the service, the control device does not need to configure the second forwarding path as the forwarding path of the service again. If the established second forwarding path is not originally the forwarding path of the service, the control device configures the second forwarding path as the forwarding path of the service.

According to the forwarding path determining method shown in FIG. 2, the path that satisfies the essential constraint and the non-essential constraint of the service in the communication network is first calculated. When path calculation fails, the path that satisfies the essential constraint in the communication network is then determined, so that the determined path can satisfy as many service requirements as possible.

The embodiment shown in FIG. 2 is described by using an example in which the path establishment request indicates to establish one forwarding path for the service. In another possible implementation, the path establishment request may further indicate to establish M (M>1) forwarding paths for the service. If the control device calculates no first forwarding path based on the global constraint, the control device may further determine M second forwarding paths for the service by performing step 202, and establish the M second forwarding paths in the communication network, to satisfy a quantity of forwarding paths established based on the service requirement. If the control device calculates S (0<S<M) first forwarding paths based on the global constraint, the control device may further determine M-S second forwarding paths for the service by performing step 202, and establish the S-M second forwarding paths in the communication network, to satisfy a quantity of forwarding paths established based on the service requirement.

The embodiment shown in FIG. 2 is described in a scenario in which the forwarding path is established for the service. In another possible implementation, a forwarding path that satisfies as many service requirements as possible in the communication network may need to be predicted for the service based on the global constraint. In this case, the control device may determine the second path for the service by performing step 202 and step 203, and does not need to perform step 201 or step 204. That is, step 201 and step 204 are optional steps. Therefore, in FIG. 2, step 201 and step 204 are represented by using dashed boxes, which indicate optional steps.

The method in embodiments of this application is described above, and an apparatus in embodiments of this application is described below. It should be understood that the apparatus described below has any function of the control device in the foregoing method. The forwarding path determining method according to embodiments of this application is described in detail with reference to FIG. 2. Based on a same inventive concept, apparatuses for implementing the forwarding path determining method according to embodiments of this application are described below with reference to FIG. 3 to FIG. 5. It should be understood that the technical features described in the method embodiment are also applicable to the following apparatus embodiments.

FIG. 3 is a diagram of a structure of a control device according to an embodiment of this application. As shown in FIG. 3, the control device 300 includes a client 301, a path management module 302, and a path algorithm module 303.

The client 301 is configured to manage a communication network, for example, manage topology information of the communication network and a configuration of a forwarding path, where the configuration of the forwarding path indicates a network device on the forwarding path, a global constraint corresponding to the forwarding path, and the like.

The path management module 302 is configured to manage a full life cycle of the forwarding path, for example, support establishment of a forwarding path in the communication network for a service, modification of a constraint of the forwarding path, sensing of a network status of the communication network, and optimize the forwarding path and delete the forwarding path when the forwarding path does not satisfy the constraint. The network status includes a topology status and a path status of the communication network.

In some embodiments, the path management module 302 is further configured to interact with a network device in the communication network, to collect the network status of the communication network. When a path establishment request is received, the path algorithm module 303 is invoked to determine a second forwarding path for the service, and path information of the second forwarding path is converted into a configuration and delivered to a corresponding network device, to establish the second forwarding path.

The path algorithm module 303 is configured to determine a first forwarding path or the second forwarding path in the communication network based on the global constraint of the service, and send the determined forwarding path to the path management module 302, so that the path management module 302 establishes, in the communication network, the forwarding path determined by the path algorithm module 303.

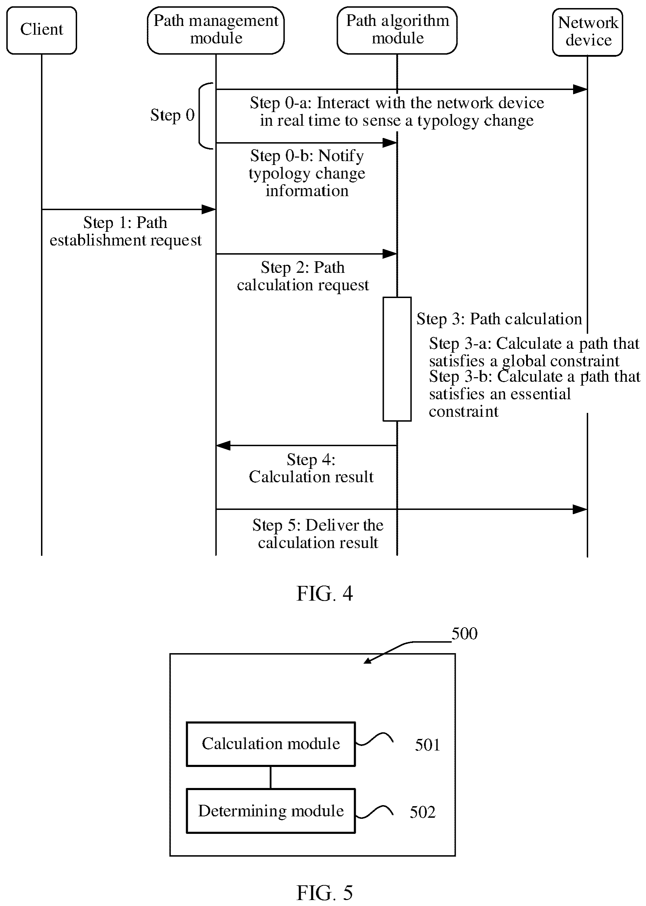

With reference to FIG. 4, the following describes an interaction procedure between modules in the control device 300.

FIG. 4 is a service flowchart of a control device according to an embodiment of this application. The service procedure includes the following steps.

Step 0: A path management module monitors a network status of a communication network in real time.

Step 0 is a step performed by the path management module in real time, and does not need to be triggered by a user. As shown in FIG. 4, step 0 includes step 0-a and step 0-b. In step 0-a, the path management module interacts with a network device in the communication network in real time to sense a topology change of the communication network, to obtain topology change information of the communication network. The topology change information indicates the topology change of the communication network. The topology change of the communication network includes addition, deletion, and an attribute change of the network device in the communication network, addition, deletion, and an attribute change of a forwarding path in the communication network, and the like. In step 0-b, the path management module notifies the topology change information to a path algorithm module, so that the path algorithm module determines, based on the topology change information, current topology change information of the communication network when subsequently having a path calculation requirement.

Step 1: A client obtains a path establishment request of a service (as described in the foregoing step 201), and sends the path establishment request to the path management module.

Step 2: After receiving the path establishment request, the path management module sends a path calculation request to the path algorithm module based on the path establishment request, where the path calculation request indicates to calculate, based on a global constraint of the service, a forwarding path that satisfies at least an essential constraint.

Step 3: After receiving the path calculation request, the path algorithm module performs path calculation based on current topology information of the communication network and the global constraint (to be specific, the essential constraint + a non-essential constraint) of the service.

As shown in FIG. 4, step 3 includes step 3-a and step 3-b. In step 3-a, the path algorithm module first attempts to calculate a path that satisfies the global constraint. If calculation succeeds, step 4 is performed; if calculation fails, step 3-b is performed. In step 3-b, the path algorithm module calculates a path that satisfies the essential constraint. If calculation succeeds, step 4 is performed. In this case, the path that satisfies the essential constraint may not satisfy all non-essential constraints, or may satisfy some or all non-essential constraints.

Step 4: The path algorithm module sends a calculation result to the path management module.

Step 5: After receiving the calculation result from the path algorithm module, the path management module converts the calculation result into a path configuration and delivers the path configuration to the network device, so that the network device establishes the corresponding forwarding path.

FIG. 5 is a diagram of a structure of a forwarding path determining apparatus according to an embodiment of this application. The apparatus 500 shown in FIG. 5 may be the control device or a part of the control device in the foregoing embodiments, and is configured to perform a method performed by the control device. The apparatus 500 includes:
a calculation module 501, configured to calculate a first forwarding path in a communication network based on an essential constraint and a non-essential constraint of a service; and
a determining module 502, configured to determine a second forwarding path in the communication network if calculation of the first forwarding path fails, where the second forwarding path satisfies the essential constraint.

In a possible implementation, there are a plurality of non-essential constraints, the plurality of non-essential constraints correspond to different non-essential levels, and the non-essential level indicates a non-essential degree of a corresponding non-essential constraint in a process of determining the second forwarding path. The determining module 502 includes:
a first calculation unit, configured to calculate a third forwarding path in the communication network based on the essential constraint if calculation of the first forwarding path fails, where the third forwarding path is an optimal path that satisfies the essential constraint in the communication network; and
a second calculation unit, configured to calculate the second forwarding path based on the essential constraint, the plurality of non-essential constraints, and a plurality of non-essential levels corresponding to the plurality of non-essential constraints if calculation of the third forwarding path succeeds, where the second forwarding path satisfies the essential constraint and at least one non-essential constraint.

In a possible implementation, the second calculation unit is configured to:
for a first non-essential level in the plurality of non-essential levels, calculate the second forwarding path based on the essential constraint and each non-essential constraint whose non-essential level is higher than the first non-essential level; and
if calculation of the second forwarding path fails, perform, by using a previous non-essential level of the first non-essential level as a new first non-essential level, the step of calculating the second forwarding path based on the essential constraint and each non-essential constraint whose non-essential level is higher than the first non-essential level, until calculation of the second forwarding path succeeds.

In a possible implementation, the second calculation unit is configured to:
for a second non-essential level in the plurality of non-essential levels, calculate a fourth forwarding path in the communication network based on the essential constraint and each non-essential constraint whose non-essential level is higher than or equal to the second non-essential level; and
if calculation of the fourth forwarding path succeeds, perform, by using a next non-essential level of the second non-essential level as a new second non-essential level, the step of calculating a fourth forwarding path in the communication network based on the essential constraint and each non-essential constraint whose non-essential level is higher than or equal to the second non-essential level, until calculation of a fourth forwarding path fails; and
determine a last successfully calculated fourth forwarding path as the second forwarding path.

In a possible implementation, the second calculation unit is configured to:
for a third non-essential level in the plurality of non-essential levels, calculate a fifth forwarding path in the communication network based on the essential constraint, a non-essential constraint at the third non-essential level, and each target constraint, where the target constraint is a non-essential constraint that can be used for calculating a forwarding path after being combined with the essential constraint;
if calculation of the fifth forwarding path succeeds, perform, by using the non-essential constraint at the third non-essential level as a new target constraint, and using a next non-essential level of the third non-essential level as a new third non-essential level, the step of calculating a fifth forwarding path in the communication network based on the essential constraint, a non-essential constraint at the third non-essential level, and each target constraint; or
if calculation of the fifth forwarding path fails, perform, by using a next non-essential level of the third non-essential level as a new third non-essential level, the step of calculating a fifth forwarding path in the communication network based on the essential constraint, a non-essential constraint at the third non-essential level, and each target constraint, until calculation based on each non-essential constraint is completed; and
determine a last successfully calculated fifth forwarding path as the second forwarding path.

In a possible implementation, the determining module 502 is configured to:
calculate a third forwarding path in the communication network based on the essential constraint if calculation of the first forwarding path fails, where the third forwarding path is an optimal path that satisfies the essential constraint in the communication network.

In a possible implementation, there are a plurality of non-essential constraints, and at least one non-essential constraint is related to a service level agreement SLA of the service. The determining module 502 is configured to:
calculate a third forwarding path in the communication network based on the essential constraint if calculation of the first forwarding path fails, where the third forwarding path is an optimal path that satisfies the essential constraint in the communication network; and
calculate the second forwarding path based on the essential constraint and the non-essential constraint related to the service level agreement SLA of the service if calculation of the third forwarding path succeeds.

In a possible implementation, the non-essential constraint is related to the service level agreement SLA of the service.

It should be understood that the apparatus 500 corresponds to the control device in the foregoing method embodiments, and the modules and the foregoing other operations and/or functions in the apparatus 500 are respectively used for implementing the steps and methods implemented by the control device in the method embodiment. For specific details, refer to the foregoing method embodiment. For brevity, the details are not described herein again.

It should be understood that when the apparatus 500 determines a forwarding path, division into the foregoing functional modules is merely used as an example for description. During actual application, the foregoing functions may be allocated to different functional modules for implementation based on a requirement. In other words, an inner structure of the apparatus 500 is divided into different functional modules, to implement all or some of the functions described above. In addition, the apparatus 500 provided in the foregoing embodiment and the foregoing method embodiments pertain to a same concept. For a specific implementation process, refer to the foregoing method embodiment. Details are not described herein again.

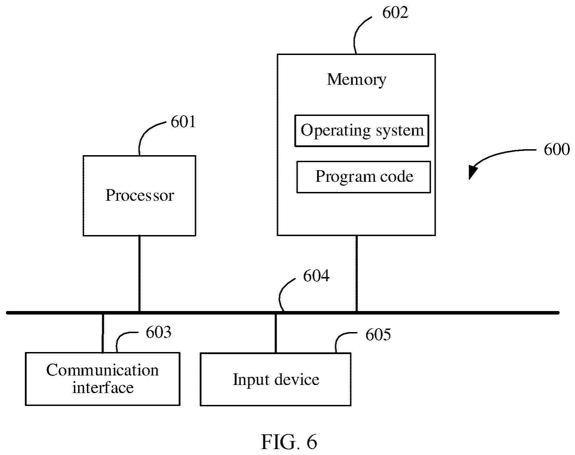

FIG. 6 is a diagram of a structure of an electronic device according to an embodiment of this application. The electronic device 600 shown in FIG. 6 may be configured as the control device in the foregoing method embodiment. As shown in the figure, the electronic device 600 includes a processor 601, a memory 602, a communication interface 603, and a bus 604. The processor 601, the memory 602, and the communication interface 603 communicate with each other through the bus 604, or may implement communication in another manner such as wireless transmission. The memory 602 is configured to store instructions, and the processor 601 is configured to execute program code stored in the memory 602. The processor 601 may invoke the program code stored in the memory 602 to perform the steps provided in the foregoing forwarding path determining method.

For example, the processor 601 may include one or more central processing units (central processing units, CPUs).

For example, the electronic device 600 may include a plurality of processors 601, and each of the processors may be a single-core processor (single-CPU), or may be a multi-core processor (multi-CPU). The processor herein may be one or more devices, circuits, and/or processing cores configured to process data (for example, computer program instructions).

The memory 602 may include a read-only memory and a random access memory, and provide instructions and data for the processor 601. The memory 602 may further include a nonvolatile random access memory. For example, the memory 602 may further store information about a device type. Alternatively, the memory 602 may be a volatile memory, or may include both the volatile memory and the nonvolatile memory.

The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 603 is configured to communicate with another device or a communication network by using any transceiver-type apparatus. The communication interface 604 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

The bus 604 is configured to transmit information between the foregoing components. In addition to the communication bus, the bus 604 may further include a power bus, a status signal bus, and the like. However, for clear description, various types of buses are all marked as the bus 604 in the figure. The communication bus may be classified into an address bus, a data bus, a control bus, and the like. For example, the communication bus may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like.

In some embodiments, the electronic device 600 may further include an output device and an input device 605. The output device communicates with the processor 601, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device 605 communicates with the processor 601, and may receive an input of a user in a plurality of manners. For example, the input device 605 may be an accelerator card, a mouse, a keyboard, a touchscreen device, a sensor device, or the like.

It should be understood that the electronic device 600 may correspond to the control device in embodiments of this application, and may correspond to a corresponding entity for performing the forwarding path determining method according to embodiments of this application. In addition, the foregoing and other operations and/or functions of the modules in the electronic device 600 are separately used to implement a corresponding procedure in FIG. 2. For brevity, details are not described herein again.

In an example embodiment, a computer-readable storage medium is further provided, for example, a memory that includes program code. The program code may be executed by a processor in an electronic device to complete the forwarding path determining method in the foregoing embodiment. For example, the computer-readable storage medium is a non-transitory computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

An embodiment of this application further provides a computer program product or a computer program. The computer program product or the computer program includes program code. The computer instructions are stored in a computer-readable storage medium. A processor of an electronic device reads the program code from the computer-readable storage medium. The processor executes the program code, so that the electronic device performs the foregoing forwarding path determining method.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the apparatus performs the forwarding path determining method in the foregoing method embodiment.

The apparatus, the device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

Based on the descriptions of the implementations, a person skilled in the art may understand that for the purpose of convenient and brief description, division into the functional modules is merely used as an example for description. During actual application, the functions may be allocated to different functional modules for completion based on a requirement. In other words, an inner structure of an apparatus is divided into different functional modules, to implement all or some of the functions described above. In addition, the foregoing embodiment and the forwarding path determining method provided in the foregoing embodiment pertain to a same concept. For a specific implementation process, refer to the method embodiments. Details are not described herein again.

In descriptions of this application, unless otherwise specified, "/" represents "or". For example, A/B may represent A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example", "for example", or the like represents giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, all path establishment requests in this application are obtained under full authorization.

All of the foregoing optional technical solutions may be randomly combined to form optional embodiments of this disclosure. Details are not described herein.

The foregoing descriptions are merely optional embodiments of this application, but are not intended to limit this application. Any modification, equivalent replacement, or improvement made without departing from the spirit and principle of this application shall fall within the protection scope of this application.

## Claims

1. A forwarding path determining method, wherein the method comprises:
calculating a first forwarding path in a communication network based on an essential constraint and a non-essential constraint of a service; and
determining a second forwarding path in the communication network if calculation of the first forwarding path fails, wherein the second forwarding path satisfies the essential constraint.

2. The method according to claim 1, wherein there are a plurality of non-essential constraints, the plurality of non-essential constraints correspond to different non-essential levels, and the non-essential level indicates a non-essential degree of a corresponding non-essential constraint in a process of determining the second forwarding path; and
the determining a second forwarding path in the communication network if calculation of the first forwarding path fails comprises:
calculating a third forwarding path in the communication network based on the essential constraint if calculation of the first forwarding path fails, wherein the third forwarding path is an optimal path that satisfies the essential constraint in the communication network; and
calculating the second forwarding path based on the essential constraint, the plurality of non-essential constraints, and a plurality of non-essential levels corresponding to the plurality of non-essential constraints if calculation of the third forwarding path succeeds, wherein the second forwarding path satisfies the essential constraint and at least one non-essential constraint.

3. The method according to claim 2, wherein the calculating the second forwarding path based on the plurality of non-essential constraints, a plurality of non-essential levels corresponding to the plurality of non-essential constraints, and the essential constraint comprises:
for a first non-essential level in the plurality of non-essential levels, calculating the second forwarding path based on the essential constraint and each non-essential constraint whose non-essential level is higher than the first non-essential level; and
if calculation of the second forwarding path fails, performing, by using a previous non-essential level of the first non-essential level as a new first non-essential level, the step of calculating the second forwarding path based on the essential constraint and each non-essential constraint whose non-essential level is higher than the first non-essential level, until calculation of the second forwarding path succeeds.

4. The method according to claim 2, wherein the calculating the second forwarding path based on the plurality of non-essential constraints, a plurality of non-essential levels corresponding to the plurality of non-essential constraints, and the essential constraint comprises:
for a second non-essential level in the plurality of non-essential levels, calculating a fourth forwarding path in the communication network based on the essential constraint and each non-essential constraint whose non-essential level is higher than or equal to the second non-essential level;
if calculation of the fourth forwarding path succeeds, performing, by using a next non-essential level of the second non-essential level as a new second non-essential level, the step of calculating a fourth forwarding path in the communication network based on the essential constraint and each non-essential constraint whose non-essential level is higher than or equal to the second non-essential level, until calculation of the fourth forwarding path fails; and
determining a last successfully calculated fourth forwarding path as the second forwarding path.

5. The method according to claim 2, wherein the calculating the second forwarding path based on the essential constraint, the plurality of non-essential constraints, and a plurality of non-essential levels corresponding to the plurality of non-essential constraints comprises:
for a third non-essential level in the plurality of non-essential levels, calculating a fifth forwarding path in the communication network based on the essential constraint, a non-essential constraint at the third non-essential level, and each target constraint, wherein the target constraint is a non-essential constraint that can be used for calculating a forwarding path after being combined with the essential constraint;
if calculation of the fifth forwarding path succeeds, performing, by using the non-essential constraint at the third non-essential level as a new target constraint, and using a next non-essential level of the third non-essential level as a new third non-essential level, the step of calculating a fifth forwarding path in the communication network based on the essential constraint, a non-essential constraint at the third non-essential level, and each target constraint; or
if calculation of the fifth forwarding path fails, performing, by using a next non-essential level of the third non-essential level as a new third non-essential level, the step of calculating a fifth forwarding path in the communication network based on the essential constraint, a non-essential constraint at the third non-essential level, and each target constraint, until calculation based on each non-essential constraint is completed; and
determining a last successfully calculated fifth forwarding path as the second forwarding path.

6. The method according to claim 1, wherein the determining a second forwarding path in the communication network if calculation of the first forwarding path fails comprises:
calculating a third forwarding path in the communication network based on the essential constraint if calculation of the first forwarding path fails, wherein the third forwarding path is an optimal path that satisfies the essential constraint in the communication network.

7. The method according to claim 1, wherein there are a plurality of non-essential constraints, and at least one non-essential constraint is related to a service level agreement SLA of the service; and
the determining a second forwarding path in the communication network if calculation of the first forwarding path fails comprises:
calculating a third forwarding path in the communication network based on the essential constraint if calculation of the first forwarding path fails, wherein the third forwarding path is an optimal path that satisfies the essential constraint in the communication network; and
calculating the second forwarding path based on the essential constraint and the non-essential constraint related to the service level agreement SLA of the service if calculation of the third forwarding path succeeds.

8. The method according to any one of claims 1 to 7, wherein the non-essential constraint is related to the service level agreement SLA of the service.

9. A forwarding path determining apparatus, wherein the apparatus comprises:
a calculation module, configured to calculate a first forwarding path in a communication network based on an essential constraint and a non-essential constraint of a service; and
a determining module, configured to determine a second forwarding path in the communication network if calculation of the first forwarding path fails, wherein the second forwarding path satisfies the essential constraint.

10. An electronic device, wherein the electronic device comprises a processor, and the processor is configured to execute program code, so that the electronic device performs the method according to any one of claims 1 to 8.

11. A computer-readable storage medium, wherein the storage medium stores at least one piece of program code, and the at least one piece of program code is read by a processor, so that an electronic device performs the method according to any one of claims 1 to 8.
